# EUROPEAN PATENT APPLICATION

(11) **EP 1 982 793 A1**
(43) Date of publication of application: **22.10.2008**
(21) Application number: 08007377.8
(22) Date of filing: 15.04.2008
(51) Int. Cl.: B23Q 1/54, B23Q 3/12

(54) **Universal head and machine tool with universal head**

(30) Priority: 16.04.2007 JP 2007107642
(71) Applicant: Mori Seiki Co.,Ltd., Nara 639-1160 (JP)
(72) Inventor: Takayama, Naoshi, Yamatokoriyama-shi Nara 639-1160 (JP); Matsumoto, Mitsuji, Yamatokoriyama-shi Nara 639-1160 (JP); Kojo, Koichi, Yamatokoriyama-shi Nara 639-1160 (JP); Yamada, Yoshihiro, Yamatokoriyama-shi Nara 639-1160 (JP)
(74) Representative: Henseler, Daniela

(57) **Abstract**

A universal head (4) changes the orientation of a tool (5, 31) freely and machines a workpiece (3) with the tool (5, 31) in the changed orientation. The universal head (4) comprises a universal head body (6), for swiveling movement, including a swinging unit (30) and an attachment (7) detachably mounted on the swinging unit (30) with a rotating tool (5) removably mounted on the attachment (7). The universal head (4) has, and simultaneously offers, the advantages of both a universal head, which allows the tool to change its orientation freely for machining a workpiece, and an attachment which allows the tool to be brought closely to the workpiece for machining the workpiece. The universal head (4) does not require a process of installing itself on and removing itself from a universal head support (10).

## Description

### BACKGROUND OF THE INVENTION

### Field of the Invention

The present invention relates to a universal head and a machine tool, and more particularly to a universal head on which an attachment can removably be mounted, and a machine tool such as a machining center (hereinafter also referred to as "MC") having such a universal head.

### Description of the Related Art

Universal heads for use in machine tools have been proposed in Japanese laid-open patent publication No. 7-223139 and U.S. patent No. 5,584,621. Known attachments with a rotating tool are disclosed in Japanese laid-open patent publication No. 6-55395 and Japanese utility model publication No. 7-46407.

The universal heads disclosed in Japanese laid-open patent publication No. 7-223139 and U.S. patent No. 5,584,621 allow a rotating tool to change its orientation and machine a workpiece with the rotating tool in the changed orientation. The rotating tool is directly mounted on the universal head. Therefore, if the rotating tool is positioned closely to the workpiece, the universal head tends to interfere with the workpiece. As a result, the rotating tool may not be positioned closely to the workpiece as desired, and hence the machining area may be unduly limited.

The attachments disclosed in Japanese laid-open patent publication No. 6-55395 and Japanese utility model publication No. 7-46407, which have the rotating tool, are mounted on a spindle head or machine spindle, and do not allow the orientation of the rotating tool to be changed.

Consequently, since different machining types require respective different attachments having rotating tools suitable for those different machining types, there is a need for the preparation of many types of dedicated attachments. In addition, an attachment changer is required to change the dedicated attachments. As the orientation of the rotating tools cannot freely be changed, there is a limitation on the range of machining types that can be achieved.

A double column MC may be required to perform both a machining process using a universal head and a machining process using a dedicated attachment. Depending on the machining process to be carried out, either one of the universal head and the dedicated attachment is mounted on the spindle head of the double column MC for machining a workpiece.

Each time a different machining process is to be performed, the universal head needs to be detached from the spindle head and the dedicated attachment needs to be mounted on the spindle head, or the dedicated attachment needs to be detached from the spindle head and another dedicated attachment or the universal head needs to be mounted on the spindle head. Such a changing operation is time-consuming and burdensome for the operator.

### SUMMARY OF THE INVENTION

It is an object of the present invention to provide a universal head which has, and simultaneously offers, the advantages of both a universal head, which allows a tool to change its orientation freely for machining a workpiece, and an attachment which allows a rotating tool to be brought closely to a workpiece for machining the workpiece in a wide machining area, and which does not require a process of installing itself on and removing itself from a universal head support, and a machine tool having such a universal head.

In order to achieve the above object, in accordance with the present invention, there is provided a universal head for use in a machine tool for changing the orientation of a tool freely and machining a workpiece with the tool in the changed orientation, the universal head comprising: a universal head body including a swingable swinging unit and adapted to be mounted for swiveling movement on a universal head support of the machine tool, the swinging unit including an attachment drive motor; and an attachment detachably mounted on the swinging unit with the rotating tool removably mounted on the attachment, wherein the rotating tool is rotatable about its own axis by the attachment drive motor of the swinging unit.

Preferably, the universal head body is angularly movable in a horizontal plane to cause the universal head to swivel about a vertical central axis of the universal head support under C-axis control to swivel the tool in the horizontal plane, the swinging unit supported by the universal head body is swingable about a horizontal central swing axis under B-axis control to swing the tool in a vertical plane, the universal head is operable under C-axis control and B-axis control to cause the tool to be oriented horizontally, downwardly perpendicularly to a floor, or obliquely in an arbitrary direction, the rotating tool has its orientation and position changeable under control of the three mutually transverse axes directions, C-axis control, and B-axis control, and machines the workpiece in the changed orientation and position, the universal head is operable under C-axis control and B-axis control to cause the rotating tool to move along a curved trajectory to machine an arbitrary curved surface on the workpiece, and the universal head remains supported on the universal head support so that a process of installing the universal head on the universal head support and removing the universal head is dispensed.

Preferably, the attachment includes an attachment shaft for rotating the rotating tool through a power transmitting mechanism, the attachment shaft having a second central axis, and the swinging unit with the attachment mounted thereon has a first central axis extending perpendicularly to the second central axis of the attachment shaft.

Preferably, the universal head body has a third central axis, the first central axis of the swinging unit extends perpendicularly to the third central axis, and the rotating tool mounted on the attachment has a fourth central axis extends parallel to and is spaced from the third central axis.

Preferably, the machine tool comprises a double column machining center, and while the swinging unit is directed horizontally, the rotating tool mounted on the attachment is oriented downwardly and spaced from the third central axis which extends vertically.

Preferably, the attachment is mounted on the universal head body so as to be oriented selectively in at least two directions which are angularly spaced by at least 90 degrees from each other.

The machine tool includes the universal head. Preferably, the machine tool comprises a double column machining center.

Since the universal head and the machine tool according to the present invention are constructed as described above, the universal head has, and simultaneously offers, the advantages of both a universal head, which allows a tool to change its orientation freely for machining a workpiece, and an attachment which allows a rotating tool to be brought closely to a workpiece for machining the workpiece in a wide machining area. The universal head does not require a process of installing itself on and removing itself from a universal head support.

The above and other objects, features, and advantages of the present invention will become apparent from the following description when taken in conjunction with the accompanying drawings which illustrate a preferred embodiment of the present invention by way of example.

### BRIEF DESCRIPTION OF THE DRAWINGS

Fig. 1 is a perspective view of a double column machining center incorporating a universal head according to the present invention;
Fig. 2 is a front elevational view of the double column machining center;
Fig. 3 is a side elevational view of the double column machining center;
Fig. 4 is a cross-sectional view of the universal head, showing internal structural details thereof;
Fig. 5 is a perspective view of the universal head;
Fig. 6 is a front elevational view of the universal head;
Fig. 7 is a side elevational view of the universal head;
Fig. 8 is a side elevational view of the universal head with a rotating tool directed downwardly;
Fig. 9 is a rear elevational view of the universal head with the rotating tool being directed downwardly;
Figs. 10A through 10C are views showing a portion of the universal head;
Figs. 11A and 11B are views illustrative of the manner in which a workpiece is machined by the rotating tool on the universal head, with an attachment being in use and not in use, respectively;
Figs. 12A through 12C are views illustrative of the manner in which the workpiece is machined by the rotating tool on the universal head with the attachment being mounted thereon, the rotating tool being directed horizontally;
Figs. 13A through 13C are views illustrative of the manner in which the workpiece is machined by the rotating tool on the universal head with the attachment being mounted thereon, the rotating tool being directed downwardly;
Figs. 14A through 14C are views illustrative of the manner in which the workpiece is machined by the rotating tool on the universal head with the attachment being not in use;
Figs. 15A through 15C are views illustrative of the manner in which the workpiece is machined by the rotating tool on the universal head with the attachment being mounted thereon;
Figs. 16A through 16C are views illustrative of the manner in which the workpiece is machined by the rotating tool on the universal head with the attachment being mounted thereon; and
Figs. 17A through 17C are views illustrative of the manner in which the workpiece is machined by the rotating tool on the universal head with the attachment being mounted thereon, Figs. 15A through 17C showing a sequence of machining operation.

### DESCRIPTION OF THE PREFERRED EMBODIMENTS

Like or corresponding parts are denoted by like or corresponding reference characters throughout views.

A universal head according to the present invention is incorporated in a machine tool and has a rotational shaft including an output portion whose orientation is freely changeable. The universal head includes an attachment with a rotating tool mounted thereon. The attachment is oriented in a direction perpendicular to the central axis of the output portion of the rotational shaft. The universal head thus constructed allows the rotating tool to machine a workpiece in a variety of machining types which have heretofore been not possible to achieve with a single universal head.

The universal head according to the present invention is mounted on a universal head support. The universal head allows the rotating tool to be changed in direction and position, and the rotating tool machines a workpiece in the changed direction and position. The universal head includes a swivel universal head body having a swingable swing member, and the attachment is mounted on an end of the swing member. The rotating tool is detachably mounted on the attachment, and can be rotated thereby.

The universal head thus constructed has, and simultaneously offers, the advantages of both a universal head and an attachment. The universal head does not require a process of installing itself on and removing itself from the universal head support.

The machine tool which incorporates the universal head comprises a double column machining center (MC) in the illustrated embodiment. However, the machine tool may be an ordinary MC such as a vertical MC or a horizontal MC, rather than the double column MC. The ordinary MC may have a spindle head (corresponding to the universal head support according to the present invention) whose central axis is directed substantially perpendicularly or parallel to the floor on which the machine tool is installed.

The machine tool may alternatively comprise a multi-axis turning center, a turning center, or a grinding machine including a spindle head which may serve as the universal head support with the universal head mounted thereon.

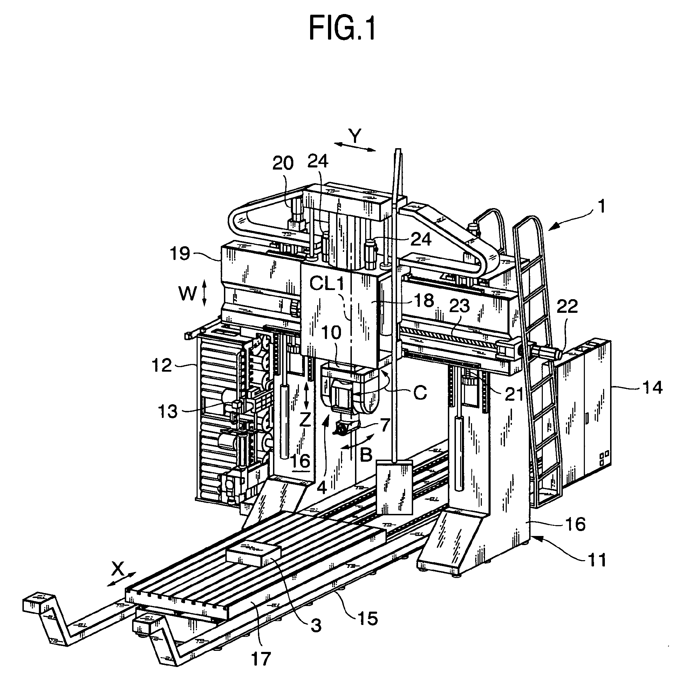

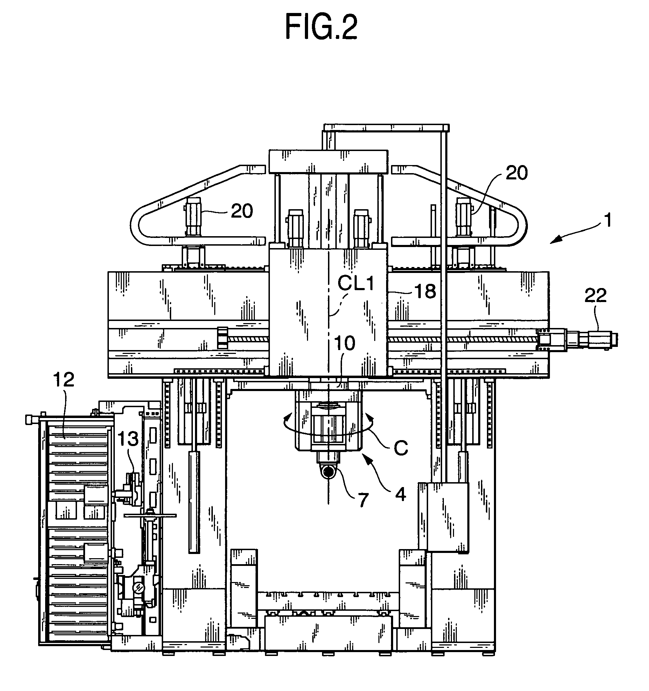

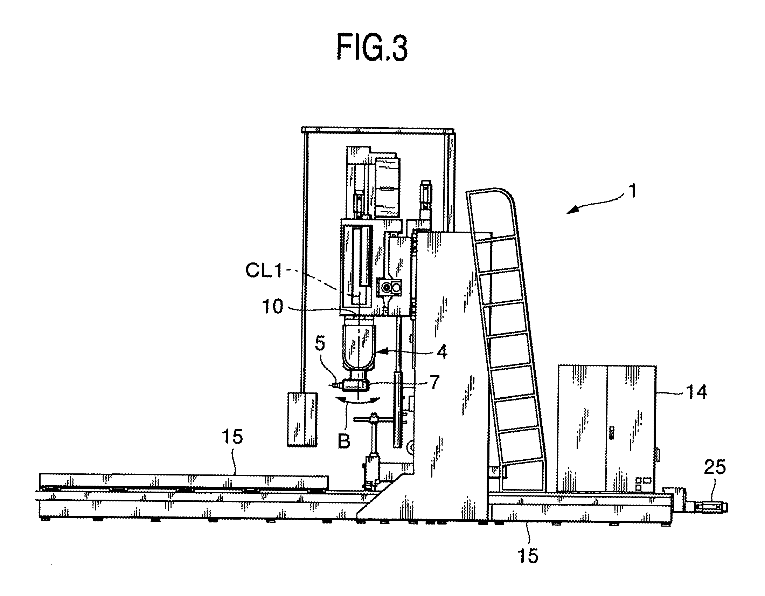

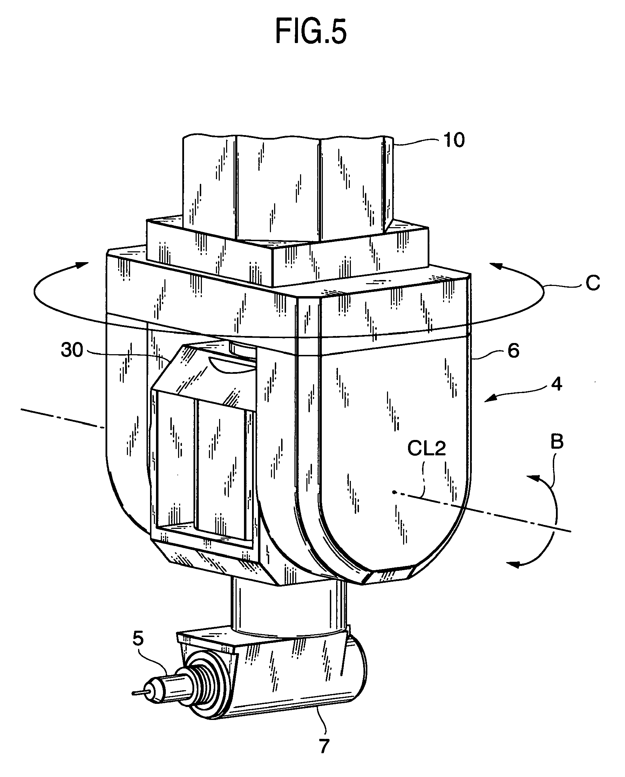

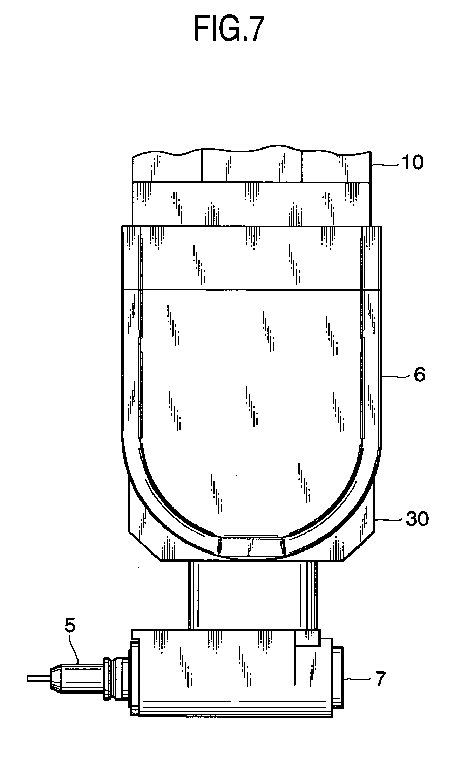

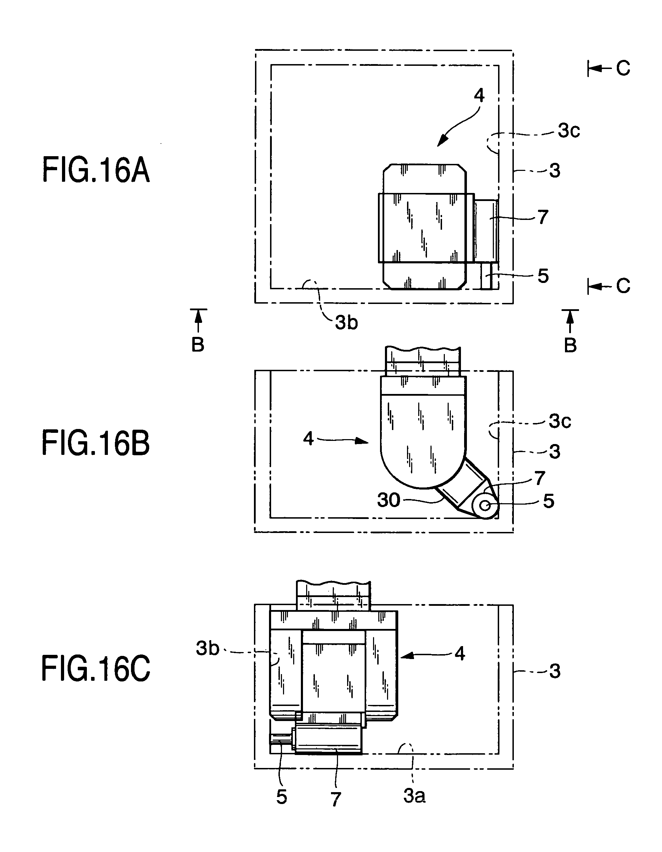

An embodiment of the present invention will be described below with reference to Figs. 1 through 17C.

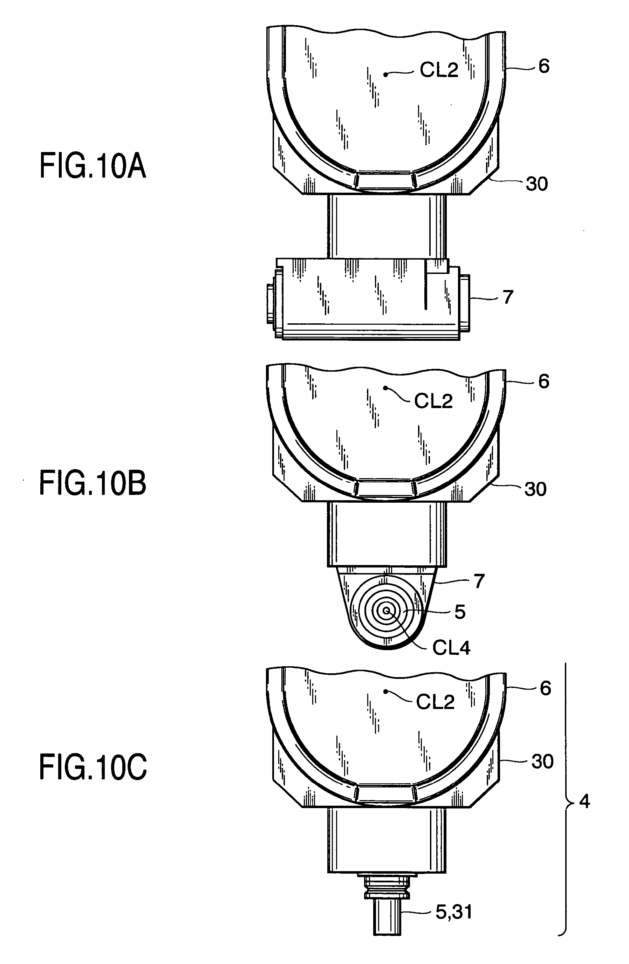

Figs. 1 through 9 show a double column machining center and a universal head according to an embodiment of the present invention. Figs. 10A through 10C show a portion of the universal head. Specifically, Fig. 10A shows an attachment with a rotating tool detached therefrom, Fig. 10B shows the attachment turned 90° as viewed in plan with respect to the universal head, and Fig. 10C shows a tool, instead of the attachment, mounted on the universal head.

As shown in Figs. 1 through 5, the double column machining center (hereafter referred to as "MC"), generally denoted by 1, as a machine tool, is suitable for machining, with high rigidity, a large workpiece 3 such as a large component made of aluminum alloy, wood, or other materials.

The MC 1 has a universal head 4 for freely changing the orientation and the position of a tool, such as a rotating tool 5, and for machining the workpiece 3 with the tool in the changed orientation and position.

The MC 1 comprises a machine body 11 including a universal head support 10 (hereinafter referred to as "head support 10"), a tool magazine 12 housing the rotating tools 5 and other tools 31 (see Fig. 10C) therein, and an automatic tool changer (ATC) 13 for automatically changing the rotating tool 5 and the other tools 31. The MC 1 may also have an automatic pallet changer (APC) for automatically changing pallets with the workpiece 3 placed thereon.

The MC 1 is controlled by a control apparatus including an NC (numerical controller) and a PLC (programmable logic controller). The control apparatus has a control console 14 located in a given position near the MC 1.

The machine body 11 includes a base comprising a horizontal bed 15 and a pair of vertical columns 16 which are disposed on the floor. The workpiece 3 is placed on a table 17 that is movably mounted on the bed 15. The columns 16 are horizontally spaced from each other as viewed in front elevation along the X-axis directions, one on each side of the bed 15. A cross rail 19 extends horizontally between and is supported on the upper ends of the columns 16.

The columns 16 and the cross rail 19 jointly make up a portal assembly disposed perpendicularly over and across the bed 15 along the Y-axis direction.

A universal head 4 is mounted on a lower end portion of the head support 10. The head support 10 has a vertical central axis CL1 oriented perpendicularly to the floor along the Z-axis direction. The head support 10 is movable in the three mutually transverse axes directions (the X-axis directions, the Y-axis directions, and the Z-axis directions) with respect to the workpiece 3 mounted on the table 17. In the MC 1, the Z-axis directions or the Z-axis extends parallel to the central axis CL1 of the head support 10, and the X-axis directions and the Y-axis directions, or the X-axis and the Y-axis extend perpendicularly to the Z-axis directions or the Z-axis. The X, Y, and Z axes jointly make up an orthogonal coordinate system.

The cross rail 19 which is supported on the columns 16 is movable in vertical directions parallel to the central axis CL1 of the head support 10, i.e., W-axis directions parallel to the Z-axis directions. A saddle 18 is movably mounted on the cross rail 19 for horizontal movement along the Y-axis directions. The head support 10 is movably mounted on the saddle 18 for vertical movement in the Z-axis directions parallel to the central axis CL1.

The cross rail 19 is movable in the W-axis directions. A stroke of the cross rail 19 in vertical directions is added to a stroke of the head support 10 relative to the saddle 18 in vertical directions. Accordingly the universal head 4 supported on the head support 10 is movable over a relatively large stroke in the Z-axis directions parallel to the central axis CL1. The head support 10 is vertically movable in the Z-axis directions, but is locked against rotation around the central axis CL1.

The table 17 is supported on the bed 15 below the vertical position of the universal head 4 supported on the head support 10. The table 17 is movable back and forth in the X-axis directions on the bed 15.

The cross rail 19 is movable vertically along the W-axis directions parallel to the Z-axis directions by W-axis servomotors 20, W-axis ball screws 21, and W-axis guide rails which are mounted on the respective columns 16. When the W-axis servomotors 20 are energized, the W-axis ball screws 21 are rotated about their own axes to move the cross rail 19 along the W-axis directions while it is guided by the W-axis guide rails.

The saddle 18 is movable horizontally along the Y-axis directions by a Y-axis servomotor 22, a Y-axis ball screw 23, and Y-axis guide rails which are mounted on the cross rail 19. When the Y-axis servomotor 22 is energized, the Y-axis ball screw 23 is rotated about its own axis to move the saddle 18 in the Y-axis directions while it is guided by the Y-axis guide rails.

The head support 10 is movable along the Z-axis directions by Z-axis servomotors 24, Z-axis ball screw, and Z-axis slide guides which are mounted on the saddle 18. When the Z-axis servomotors 24 are energized, the Z-axis ball screw is rotated about their own axis to move the head support 10 in the Z-axis directions while it is guided by the Z-axis slide guides.

The table 17 is movable along the X-axis directions by an X-axis servomotor 25, an X-axis ball screw, and X-axis guide rails which are mounted on the bed 15. When the X-axis servomotor 25 is energized, the X-axis ball screw is rotated about its own axis to move the table 17 in the X-axis directions while it is guided by the X-axis guide rails.

The universal head 4 mounted on the lower end portion of the head support 10 is controlled to swivel in a horizontal plane under C-axis control, and is also controlled to swing in a vertical plane under B-axis control.

As described above, the head support 10 is relatively movable in the three mutually transverse axes directions (the X-axis directions, the Y-axis directions, and the Z-axis directions) with respect to the workpiece 3 on the table 17. The universal head 4 is controlled to swivel in the horizontal plane under C-axis control, and the rotating tool 5 which is mounted on the universal head 4 is controlled to swing in the vertical plane under B-axis control. As a result, the MC 1 is a 6-axis controlled double column machining center.

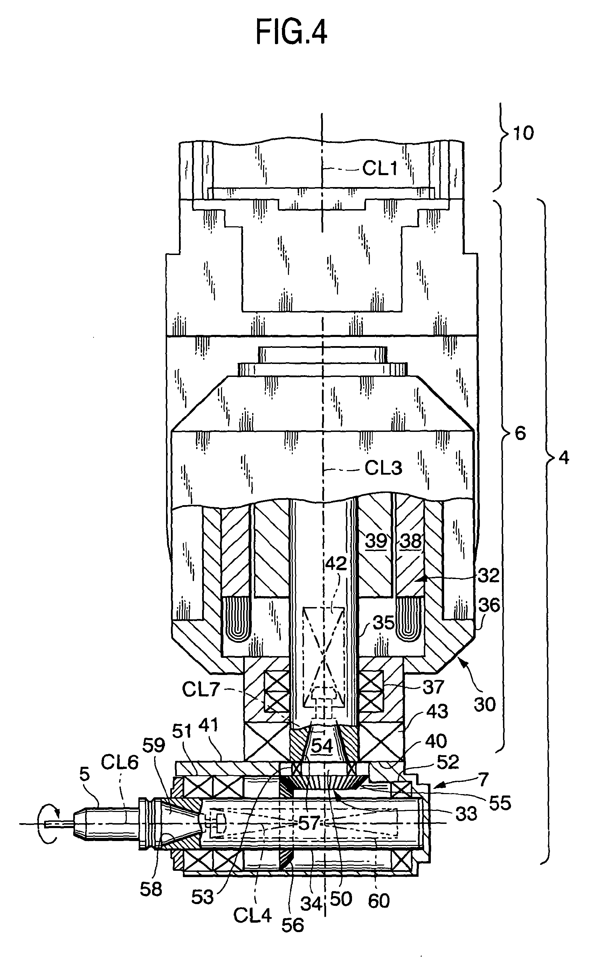

The universal head 4 will be described in detail below with reference to Figs. 4 through 10C.

Under C-axis control and B-axis control, the universal head 4 freely changes the orientation of the rotating tool 5 (or one of the other tools 31) mounted thereon, and allows the rotating tool 5 (or the other tool 31) to machine the workpiece 3 in the changed orientation. The universal head 4 comprises a universal head body 6 and an attachment 7 on which the rotating tool 5 can be mounted.

The attachment 7 is removably mounted on the universal head body 6. The attachment 7 may be removed from the universal head body 6, and the other tool 31 or the rotating tool 5 may directly be mounted on the universal head body 6.

The universal head body 6 is movably mounted on the head support 10 for swiveling movement in the horizontal plane. The universal head body 6 can be swiveled in the horizontal plane about the central axis CL1 of the head support 10 by a C-axis actuator (not shown) housed in the head support 10 or the saddle 18 under C-axis control.

Consequently, the universal head 4 can be swiveled in the horizontal plane about the central axis CL1 of the head support 10 under C-axis control for thereby controlling the orientation of the rotating tool 5 or the other tool 31 as viewed in plan.

The universal head body 6 has a swinging unit 30 supported therein which is swingable in the vertical plane about a horizontal central swing axis CL2 of the swinging unit 30. The attachment 7 is removably mounted on the swinging unit 30 as described later.

The universal head body 6 houses therein a B-axis actuator (not shown) for actuating the swinging unit 30 to swing in the vertical plane about the central swing axis CL2 for thereby directing the rotating tool 5 or the other tool 31 into a given direction under B-axis control.

The C-axis actuator has a function to swing the universal head 4 in the horizontal plane under C-axis control for indexing the rotating tool 5 or the other tool 31 in a desired direction (a desired horizontal direction as viewed in plan) about a third central axis CL5 of the universal head body 6.

The B-axis actuator has a function to swing the swinging unit 30 in the vertical plane about the horizontal central swing axis CL2 of the swinging unit 30 under B-axis control for indexing the rotating tool 5, which may directly be mounted on the swinging unit 30, in a desired direction. If the other tool 31 is directly mounted on the swinging unit 30 without the attachment 7, the other tool 31 may be directed in the desired directions.

The swinging unit 30 has a rotational shaft 35, and the attachment 7 has an attachment shaft 34, as described later. The term "desired direction" described above refers to a direction lying in a vertical plane defined by a first central axis CL3 of the swinging unit 30, i.e., the central axis of the rotational shaft 35, and a second central axis CL4 of the attachment shaft 34.

The attachment 7 is removably mounted on the swinging unit 30. The rotating tool 5 is removably mounted on the attachment 7. The rotating tool 5 is rotated by a built-in attachment drive motor 32 disposed in the swinging unit 30.

The universal head 4, which is of a 6-axis controlled configuration, including the attachment 7 has, and simultaneously offers, the advantages of both a universal head and an attachment.

Specifically, the advantage of the universal head is that the rotating tool 5 can freely be changed in its orientation and can machine the workpiece 3 in the changed orientation, and the advantage of the attachment is that the rotating tool 5 can be placed closely to the workpiece 3 for machining the workpiece 3 in a wide machining area.

The universal head 4 may remain supported on the head support 10. As a result, a process of installing the universal head 4 on the head support 10 and removing the universal head 4 from the head support 10 may be dispensed with, and the operator is freed from the burden of a setup process.

The attachment drive motor 32 is housed in the swinging unit 30. The attachment drive motor 32 has the rotational shaft 35 that is rotatably supported for rotation about the first central axis CL3 of the swinging unit 30. Specifically, the rotational shaft 35 is rotatably supported in a swinging unit housing 36 of the swinging unit 30 by bearings 37 for rotation about the first central axis CL3 of the swinging unit 30.

The attachment drive motor 32 also has a stator 38 fixedly mounted in the swinging unit housing 36 around the rotational shaft 35, and a rotor 39 fixedly mounted on the rotational shaft 35 and disposed within the stator 38. The rotational shaft 35 is rotatable at rotational speeds corresponding to a control signal supplied to the attachment drive motor 32.

The attachment 7 has an attachment housing 41, an input shaft 50, and the attachment shaft 34 as an output shaft. The input shaft 50 is rotatably supported on the attachment housing 41 for rotation about a central axis CL7 which extends perpendicularly to the second central axis CL4 of the attachment shaft 34. The attachment shaft 34 is rotatably supported in the attachment housing 41 for rotation about the second central axis CL4.

With the attachment 7 being mounted on the swinging unit 30, the first central axis CL3 of the swinging unit 30, i.e., the central axis of the rotational shaft 35, and the second central axis CL4 extend perpendicularly to each other. The attachment shaft 34, which has the second central axis CL4, serves to rotate the rotating tool 5 with rotational drive forces which are transmitted from the rotational shaft 35 of the attachment drive motor 32 through a power transmitting mechanism 33 to the rotating tool 5.

The rotating tool 5 can be oriented to project in a direction perpendicular to the first central axis CL3 of the swinging unit 30. Accordingly, even when the rotating tool 5 is positioned closely to the workpiece 3, the universal head body 6 does not interfere with the workpiece 3. As a result, the rotating tool 5 can machine the workpiece 3 in a wide machining area.

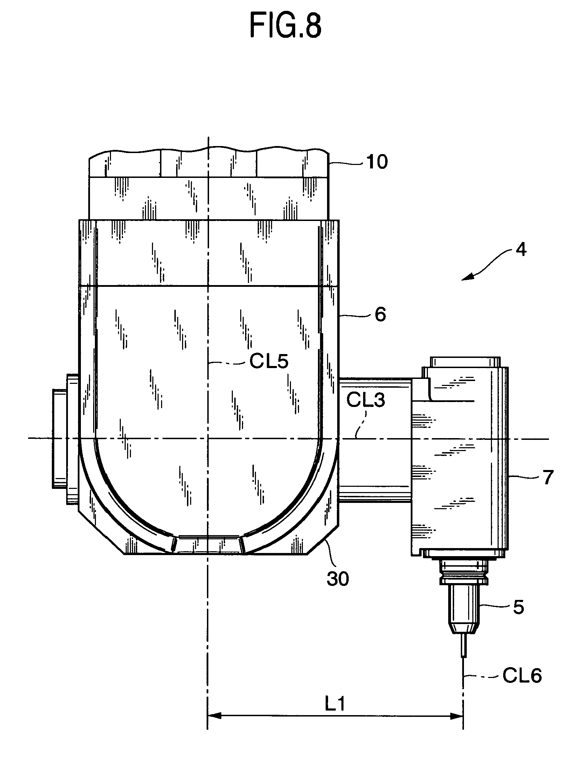

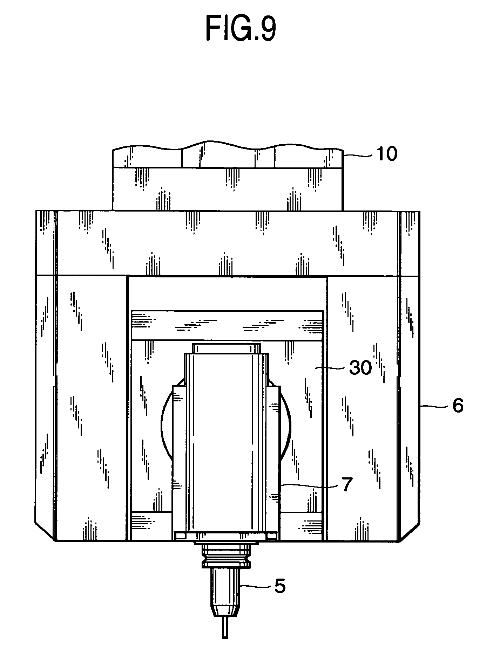

The first central axis CL3 of the swinging unit 30 with the attachment 7 mounted thereon may be oriented in a direction perpendicular to the third central axis CL5 of the universal head body 6 (see Figs. 8 and 9).

When the first central axis CL3 is oriented in the direction perpendicular to the third central axis CL5, the rotating tool 5 mounted on the attachment 7 has a fourth central axis CL6 extending parallel to and spaced from the third central axis CL5 of the universal head body 6 by a distance L1, for example (see Fig. 8).

As a result, the rotating tool 5 can machine the workpiece 3 at the position of the fourth central axis CL6 of the rotating tool 5, which is displaced off and parallel to the center of the universal head 4 for C-axis control, i.e., the third central axis CL5 of the universal head body 6.

The third central axis CL5 of the universal head body 6 is aligned with the central axis CL1 of the head support 10, and the fourth central axis CL6 of the rotating tool 5 is aligned with the second central axis CL4 of the attachment shaft 34.

In Figs. 1 through 7, the rotating tool 5 mounted on the attachment 7 is oriented horizontally along the X-axis directions.

In this case, the attachment 7 is mounted on the swinging unit 30 such that the central axis of the attachment 7, i.e., the second central axis CL4 of the attachment shaft 34, is positioned in the swinging plane of the swinging unit 30. The swinging plane of the swinging unit 30 refers to a plane defined by the first central axis CL3 of the swinging unit 30 and the second central axis CL4 of the attachment shaft 34.

As described above, the machine tool according to the present embodiment is the double column machining center (MC 1). Therefore, when the swinging unit 30 is directed horizontally as shown in Figs. 8 and 9, the rotating tool 5 mounted on the attachment 7 is oriented downwardly and spaced the distance L1 from the third central axis CL5 of the universal head body 6 which is directed vertically.

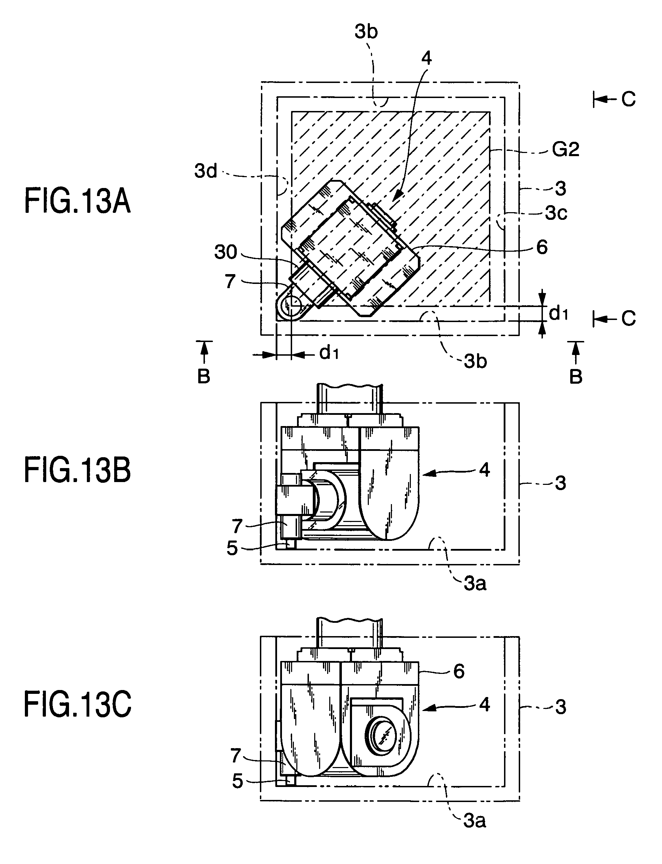

The rotating tool 5 as it is oriented downwardly can be closely moved toward the workpiece 3 and then can machine the workpiece 3 in a wide machining area as shown in Figs. 13A through 13C.

As shown in Fig. 4, the swinging unit 30 includes an attachment clamp mechanism 42 disposed in the rotational shaft 35 and an attachment housing clamp mechanism 43 disposed around the rotational shaft 35.

The input shaft 50 of the attachment 7 is unclampably clamped to the rotational shaft 35 by the attachment clamp mechanism 42. The attachment housing 41 is unclampably clamped to the swinging unit housing 36 by the attachment housing clamp mechanism 43.

The attachment shaft 34 is rotatably supported in the attachment housing 41 by bearings 51, 52. The input shaft 50, which has an attachment shank 54 on one end thereof, is rotatably supported in the attachment housing 41 by a bearing 53.

The input shaft 50 also has an input shaft bevel gear 55 disposed on the other end thereof remote from the attachment shank 54. The input shaft bevel gear 55 is held in mesh with an attachment shaft bevel gear 56 mounted on the attachment shaft 34.

The input shaft 50, the bevel gears 55, 56, and the attachment shaft 34 jointly make up the power transmitting mechanism 33 which transmits the rotational drive forces of the rotational shaft 35 to the rotating tool 5.

The rotational shaft 35 has a tapered shank mount surface 57 in an end opening thereof. The attachment shank 54 of the attachment 7 is removably mounted on the tapered shank mount surface 57.

While the attachment shank 54 is mounted on the tapered shank mount surface 57, the input shaft 50 is clamped to the rotational shaft 35 by the attachment clamp mechanism 42. At this time, the central axis CL7 of the input shaft 7 is aligned with the central axis of the rotational shaft 35, i.e., the first central axis CL3 of the swinging unit 30. The input shaft 50 is now rotatable in unison with the rotational shaft 35.

When the input shaft 50 is rotated in unison with the rotational shaft 35, the input shaft bevel gear 55 and the attachment shaft bevel gear 56 are rotated to cause the attachment shaft 34 to rotate about its own axis.

The attachment shaft 34 has a tapered shank mount surface 58 for the rotating tool 5 in an end opening thereof at one end of the attachment shaft 34. The rotating tool 5 has a shank 59 removably mounted on the tapered shank mount surface 58.

The attachment 7 includes a rotating tool clamp mechanism 60 disposed in the attachment shaft 34 for unclampably clamping the rotating tool 5. When the shank 59 of the rotating tool 5 is mounted on the tapered shank mount surface 58, the rotating tool 5 is clamped to the attachment shaft 34 by the rotating tool clamp mechanism 60. At this time, the second central axis CL4 of the attachment shaft 34 is aligned with the fourth central axis CL6 of the rotating tool 5.

When the attachment shaft 34 is then rotated by the input shaft 50 through the bevel gears 55, 56, the rotating tool 5 is rotated about its own axis in unison with the attachment shaft 34.

The attachment drive motor 32 is energized by a control signal from the control apparatus. The rotational drive forces of the attachment drive motor 32 are transmitted through the power transmitting mechanism 33, i.e., the rotational shaft 35, the input shaft 50, the bevel gears 55, 56, and the attachment shaft 34, to the rotating tool 5. As a result, the rotating tool 5 is rotated at rotational speeds depending on the control signal from the control apparatus for machining the workpiece 3.

Alternatively, the attachment 7 may be detached from the swinging unit 30, and the other tool 31 (see Fig. 10C) may directly be mounted on the swinging unit 30.

Specifically, the tool 31 has a shank (not shown) mounted on the tapered shank mount surface 57, and is clamped to the rotational shaft 35 by the attachment clamp mechanism 42. Since the rotational drive forces of the attachment drive motor 32 are transmitted directly to the tool 31, the tool 31 can machine the workpiece 3 with high rigidity.

The rotating tool 5 may directly be mounted on the universal head body 6. Specifically, the shank 59 of the rotating tool 5 is mounted on the tapered shank mount surface 57, and the rotating tool 5 is clamped to the rotational shaft 35 by the attachment clamp mechanism 42.

When the universal head 4 is operated under C-axis control, the universal head 4 is swiveled about the third central axis CL5 of the swinging unit 30 for thereby orienting the rotating tool 5 or the tool 31 in an arbitrary direction.

While the universal head 4 is operated under B-axis control, the swinging unit 30 swings about the horizontal central swing axis CL2. As a result, the rotating tool 5 is tilted to an arbitrary angle to the horizontal plane.

For example, the rotating tool 5 can thus be oriented in a horizontal direction as shown in Figs. 1 through 7, vertically downwardly toward the floor as shown in Figs. 8 and 9, or obliquely in any arbitrary direction. The rotating tool 5 which is thus freely oriented in any directions is cable of machining the workpiece 3 in various ways which have heretofore been not possible to achieve.

Fig. 10A shows the attachment 7 from which the rotating tool 5 has been removed for allowing the ATC 13 to change tools between the tool magazine 12 and the universal head 4.

The attachment 7 can be mounted on the universal head body 6 so as to be oriented selectively in at least two directions (first and second directions) which are angularly spaced by at least 90 degrees from each other.

For example, if the attachment 7 is mounted on the swinging unit 30 supported in the universal head body 6 while being oriented in the first direction, the attachment 7 is removed from the swinging unit 30. Thereafter, the attachment 7 is turned 90 degrees so that it is oriented in the second direction, and then mounted on the swinging unit 30. Thus, the attachment 7 is mounted on the universal head body 6 while being oriented in the second direction.

Alternatively, the attachment 7 may be mounted on the universal head body 6 so as to be oriented selectively in at least three directions (first, second, and third directions) which are angularly spaced by 90 degrees. For example, if the attachment 7 is at 0 degree when it is oriented in the first direction, then the attachment 7 is at 90 degrees when it is oriented in the second direction and at 180 degrees when it is oriented in the third direction.

Further alternatively, the attachment 7 may be mounted on the universal head body 6 so as to be oriented selectively in at least four directions (first, second, third, and fourth directions) which are angularly spaced by 90 degrees. For example, if the attachment 7 is at 0 degree when it is oriented in the first direction, then the attachment 7 is at 90 degrees when it is oriented in the second direction, at 180 degrees when it is oriented in the third direction, and at 270 degrees when it is oriented in the fourth direction.

In the above embodiment, the attachment 7 mounted on the universal head body 6 is oriented in the first direction. At this time, the swinging unit 30 is oriented downwardly perpendicularly to the floor as shown in Figs. 4 through 7. As viewed in plan, the second central axis CL4 of the attachment shaft 34 extends perpendicularly to the central axis about which the swinging unit 30 swings, i.e., the horizontal central swing axis CL2 of the universal head body 6.

In Fig. 10B, however, the attachment 7 mounted on the universal head body 6 is oriented in the second direction which is angularly spaced 90 degrees from the first direction. At this time, the second central axis CL4 of the attachment shaft 34 extends parallel to the central axis about which the swinging unit 30 swings, i.e., the horizontal central swing axis CL2.

With the attachment 7 being mounted on the universal head body 6 so as to be oriented in the second direction as shown in Fig. 10B, the universal head 4 can be operated under C-axis control and B-axis control. Therefore, the orientation, i.e., the second direction, of the rotating tool 5 and the trajectory thereof are different from the orientation, i.e., the first direction, of the rotating tool 5 and the trajectory thereof in the above embodiment as shown in Figs. 4 through 7. As a consequence, the rotating tool 5 is capable of machining the workpiece 3 in other machining types than when the rotating tool 5 is oriented as shown in Figs. 4 through 7. The machine tool can thus machine the workpiece 3 in a wide variety of machining types.

In Fig. 10C, the other tool 31 or the rotating tool 5 is directly mounted on the universal head body 6. The tool 31 or the rotating tool 5 thus mounted in positions can machine the workpiece 3 with increased rigidity because the rotational shaft 35 directly rotates the tool 31 or the rotating tool 5.

In this case, however, the universal head 4 cannot be operated under C-axis control. Under B-axis control, the swinging unit 30 may be swung with respect to the universal head body 6 to change the orientation of the tool 31 or the rotating tool 5. The tool 31 usually comprises a rotatable tool, but may rather be a nonrotatable tool.

A process of operation of the MC 1 for machining the workpiece 3 with the rotating tool 5 will be described below.

The attachment housing 41 of the attachment 7 is clamped to and fixedly positioned on the swinging unit housing 36 of the swinging unit 30 by the attachment housing clamp mechanism 43. The input shaft 50 of the attachment 7 is clamped to the rotational shaft 35 by the attachment clamp mechanism 42.

The rotating tool 5 is clamped to the attachment shaft 34 by the rotating tool clamp mechanism 60. The workpiece 3 is fixedly positioned on the table 17 directly or by a pallet, not shown.

When the operator operates the control console 14, the control apparatus outputs a control signal. Based on the control signal, the head support 10 and the universal head 4 moves in the three mutually transverse axes directions (the X-axis directions, the Y-axis directions, and the Z-axis directions) with respect to the workpiece 3 on the table 17.

The universal head 4 is operated under C-axis control to swivel in the horizontal plane by the C-axis actuator, and the swinging unit 30 is operated under B-axis control to swing in the vertical plane by the B-axis actuator.

When the attachment drive motor 32 is energized, its rotational drive forces are transmitted through the rotational shaft 35, the input shaft 50, the bevel gears 55, 56, and the attachment shaft 34, to the rotating tool 5. As a result, the rotating tool 5 clamped to the attachment shaft 34 is rotated at rotational speeds depending on the control signal from the control apparatus.

The rotating tool 5 which is being rotated is relatively moved in the three mutually transverse axes directions with respect to the workpiece 3, and the universal head 4 is operated under C-axis control and B-axis control. In this manner, the orientation of the rotating tool 5 is freely changed, and the workpiece 3 is machined by the rotating tool 5 in the changed orientation.

For changing the rotating tool 5 to another tool, the rotating tool 5 is removed from the attachment 7 and the other tool is removed from the tool magazine 12 and installed on the attachment 7 by the ATC 13.

When the workpiece 3 is completely machined, the machined workpiece 3 is replaced with another workpiece 3 to be machined either in a setup process carried out by the operator or by the automatic pallet changer. Thereafter, the MC 1 is actuated again to machine the new workpiece 3. The above process is repeated for the MC 1 to machine a plurality of workpieces 3 successively.

The attachment 7 is mostly removed from and installed on the swinging unit 30 manually by the operator according to a setup process. However, the attachment 7 may be removed from and installed on the swinging unit 30 automatically by the ATC 13 to free the operator from the burden of a setup process.

The other tool 31 (see Fig. 10C) may be installed on the swinging unit 30 either by the ATC 13 or in a setup process carried out by the operator.

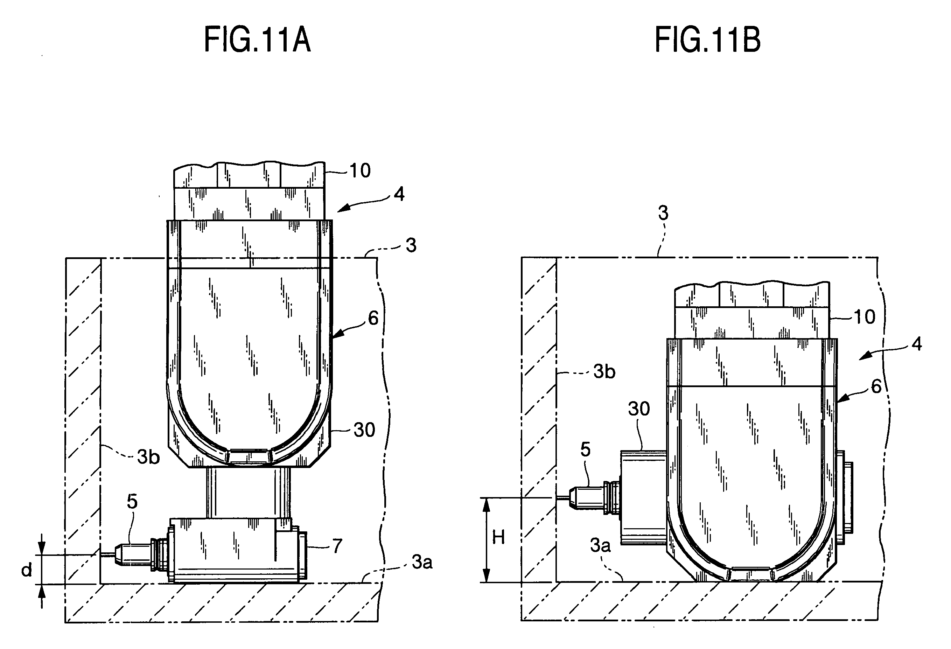

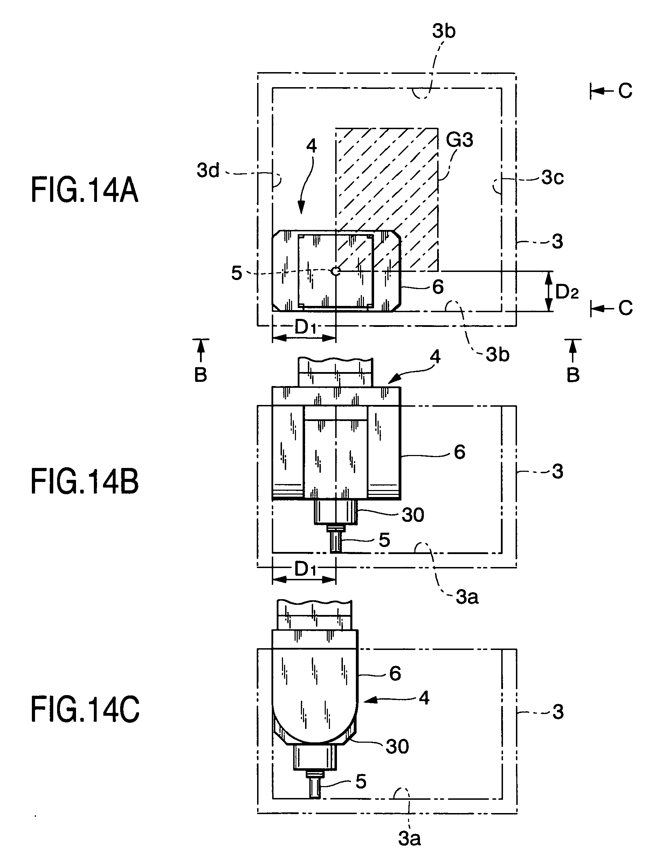

Figs. 11A, 12A through 13C, 15A through 17C are views illustrative of the manner in which the workpiece 3 is machined by the rotating tool 5 on the attachment 7 mounted on the universal head 4. For comparison, Figs. 14A through 14C are views illustrative of the manner in which the workpiece 3 is machined by the rotating tool 5 on the universal head 4, without using the attachment 7.

In Figs. 11A and 11B, the rotating tool 5 machines a vertical inner wall 3b of the workpiece 3, with the attachment 7 being in use and not in use, respectively. Specifically, in Fig. 11A, the workpiece 3 is machined by the rotating tool 5 on the attachment 7 which is mounted on the universal head 4 in the first direction. The rotating tool 5 on the attachment 7 is rotated about its own axis.

The attachment 7 has an end which projects from the universal head body 6, and the rotating tool 5 is mounted on the projecting end of the attachment 7 and oriented horizontally. Therefore, the universal head body 6 does not interfere with the workpiece 3, and the rotating tool 5 is allowed to move closely to a bottom 3a of the workpiece 3.

As a result, the rotating tool 5 can machine the inner wall 3b of the workpiece 3 at a position close to the bottom 3a, e.g., a position spaced from the bottom 3a by a small distance d = 90 mm. The attachment 7 is thus effective to allow the rotating tool 5 to machine the workpiece 3 in a wide machining area.

In Fig. 11B, the workpiece 3 is machined by the rotating tool 5 which is mounted on the universal head 4, with the attachment 7 being not in use. As the attachment 7 is not used, the rotating tool 5 is directly mounted on the swinging unit 30 and is directly rotatable by the rotational shaft 35.

The rotating tool 5 directly mounted on the swinging unit 30 is oriented horizontally. When the rotating tool 5 is moved toward the workpiece 3, the universal head body 6 first interferes with the bottom 3a of the workpiece 3, preventing the rotating tool 5 from being placed closely to the bottom 3a.

As a result, the rotating tool 5 can machine the inner wall 3b of the workpiece 3 only at a position far from the bottom 3a, e.g., a position spaced from the bottom 3a by a distance H = 280 mm. Therefore, when the attachment 7 is not used, the rotating tool 5 can machine the workpiece 3 in a relatively small machining area.

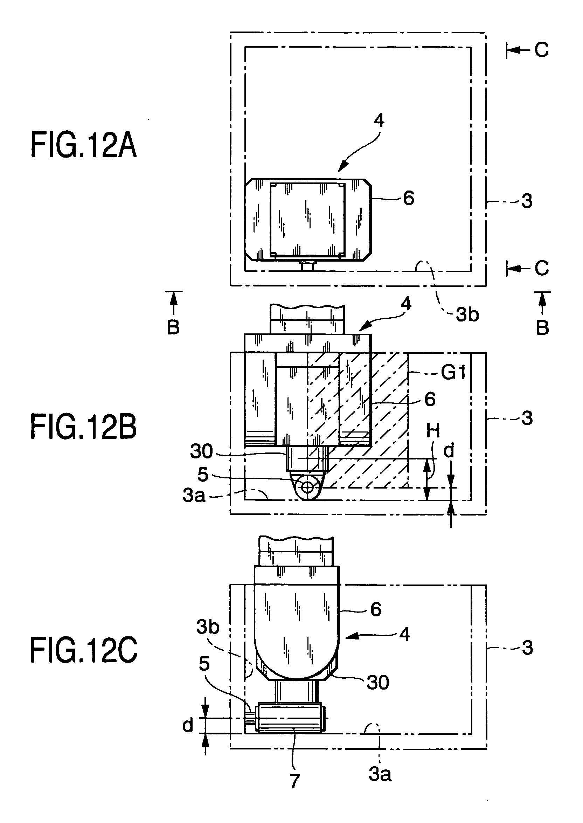

Figs. 12B, 13B, 14B, 15B, 16B, and 17B are views taken along lines B - B of Figs. 12A, 13A, 14A, 15A, 16A, and 17A, respectively. Figs. 12C, 13C, 14C, 15C, 16C, and 17C are views taken along lines C - C of Figs. 12A, 13A, 14A, 15A, 16A, and 17A, respectively.

In Figs. 12A through 12C, 13A through 13C, the attachment 7 is mounted on the swinging unit 30 so as to be oriented in the first direction.

The machining mode shown in Figs. 12A through 12C corresponds to the machining mode shown in Fig. 11A. Specifically, in Figs. 12A through 12C, the swinging unit 30 is directed downwardly, and the attachment 7 is oriented horizontally.

The rotating tool 5 is lowered to a position near the bottom 3a of the workpiece 3. The rotating tool 5 can machine the inner wall 3b of the workpiece 3 at a position close to the bottom 3a, e.g., a position spaced from the bottom 3a by a small distance d = 90 mm.

In Fig. 12B, the area shown hatched by the parallel dot-and-dash lines represents a machining area G1 in which the inner wall 3b of the workpiece 3 can be machined when the attachment 7 is used. A machining area in which the workpiece 3 can be machined when the attachment 7 is not used is smaller than the machining area G1 because the rotating tool 5 can machine the inner wall 3b of the workpiece 3 only at a position far from the bottom 3a, e.g., a position spaced from the bottom 3a by a distance H = 280 mm, as described above.

With the attachment 7 being mounted on the universal head 4, the rotating tool 5 can machine the inner wall 3b of the workpiece 3 at a position close to the bottom 3a, e.g., a position spaced from the bottom 3a by a small distance d = 90 mm, as described above. As a consequence, the machining area G1 for the inner wall 3b is relatively large, close to the bottom 3a of the workpiece 3.

In Figs. 13A through 13C, the attachment 7 is directed vertically to orient the rotating tool 5 downwardly for machining the bottom 3a of the workpiece 3. For comparison, Figs. 14A through 14C are illustrative of the manner in which the attachment 7 is not used and the rotating tool 5 is oriented downwardly and directly mounted on the universal head body 6, as shown in Fig. 10C, for machining the bottom 3a of the workpiece 3.

In Figs. 13A, 14A, the areas shown hatched by the parallel dot-and-dash lines represent machining areas G2, G3 in which the bottom 3a of the workpiece 3 can be machined by the rotating tool 5.

As shown in Figs. 14A through 14C, when the attachment 7 is not in use, the rotating tool 5 can machine the bottom 3a only at positions far from inner walls 3b, 3c, 3d, e.g., positions spaced from the inner walls 3b, 3c, 3d by distances D1 = 425 mm, D2 = 280 mm. As a result, the machining area G3 for the bottom 3a is relatively small.

In Figs. 13A through 13C, however, since the attachment 7 is mounted on the universal head 4, the rotating tool 5 can be positioned closely to the corners of the inner space of the workpiece 3.

Consequently, the rotating tool 5 can machine the bottom 3a at positions close to the inner walls 3b, 3c, 3d, e.g., positions spaced from the inner walls 3b, 3c, 3d by a distance d1 = 100 mm. As a result, the machining area G2 for the bottom 3a is relatively wide, close to the inner walls 3b, 3c, 3d.

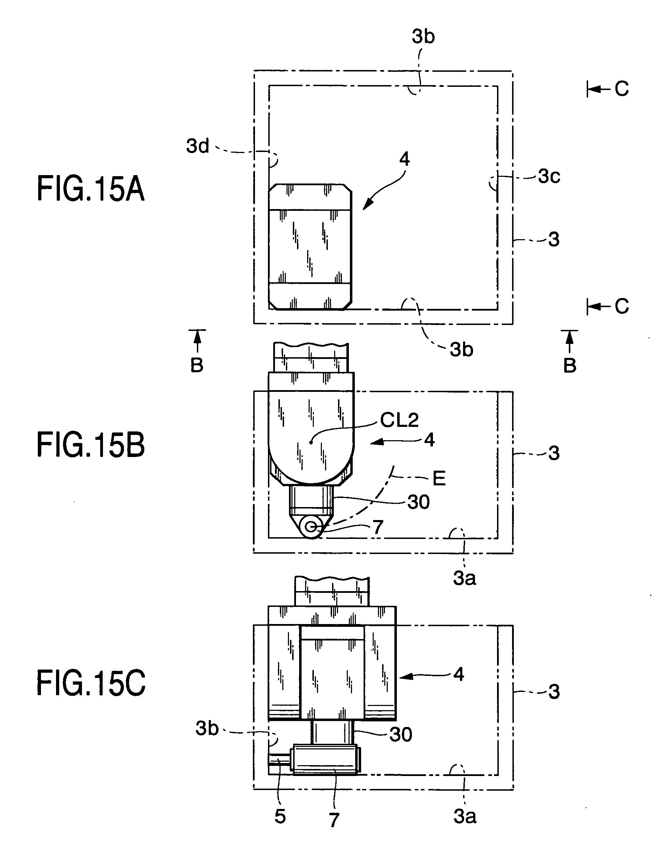

Tn Figs. 15A through 17C, the attachment 7 is mounted on the swinging unit 30 supported in the universal head body 6 so as to be oriented in the second direction (see Fig. 10B). While the universal head 4 is controlled to move in the three mutually transverse axes directions, the swinging unit 30 is operated under B-axis control.

The attachment 7 and the rotating tool 5 are thus caused to swing along a trajectory E about the horizontal central swing axis CL2 of the swinging unit 30. As a result, the rotating tool 5 can machine the inner wall 3b of the workpiece 3.

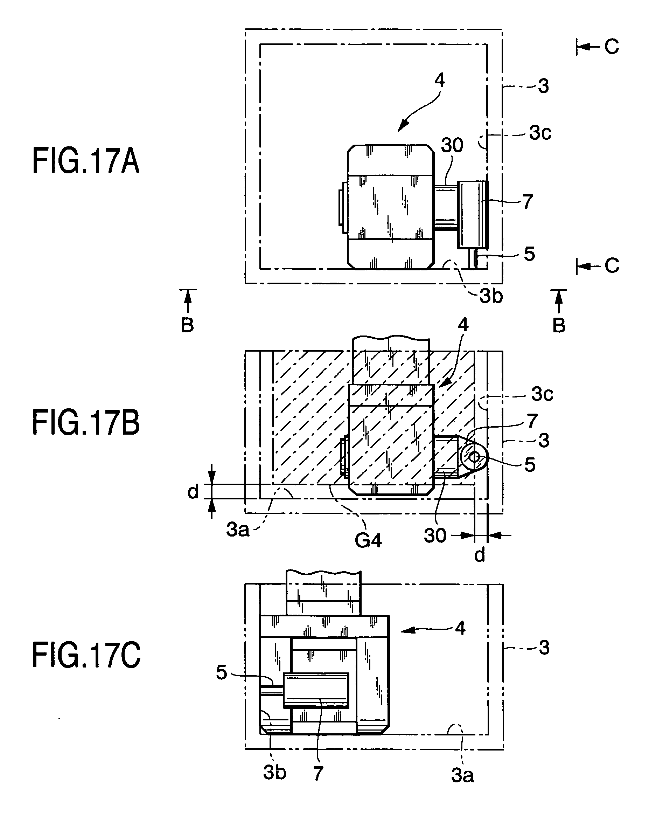

In Fig. 17B, the area shown hatched by the parallel dot-and-dash lines represents a machining area G4 in which the inner wall 3b of the workpiece 3 can be machined as shown in Figs. 15A through 17C. The attachment 7 is mounted on the universal head 4, and the swinging unit 30 is operated under B-axis control. In this manner, the rotating tool 5 can machine the inner wall 3b of the workpiece 3 at a position close to the bottom 3a and a position close to the inner wall 3c, e.g., positions spaced from the bottom 3a and the inner wall 3c by a small distance d = 90 mm.

It can thus be seen that the machining area G4 for the inner wall 3b is relatively large, close to the bottom 3a and the inner wall 3c. Accordingly, the rotating tool 5 can be positioned closely to the workpiece 3 and can machine the inner wall 3b in the wide machining area G4.

Though the inner wall 3b has been described as being machined by the rotating tool 5, the other inner walls 3c, 3d and the bottom 3a can also be machined in a wide machining area.

Heretofore, since the universal head tends to first interfere with the workpiece, it has not been possible to position the rotating tool 5 as closely to the workpiece 3 as desired. With the universal head 4 according to the present invention, the rotating tool 5 projects from the distal end of the attachment 7, and hence can be brought closely to the workpiece 3 while being freely adjusted in orientation and position. Particularly, inasmuch as the rotating tool 5 can be positioned closely to the corners of the inner space of the workpiece 3, it provides a relatively wide machining area for the workpiece 3.

The rotating tool 5 mounted on the attachment 7 is rotated by the attachment drive motor 32 disposed in the swinging unit 30 of the universal head body 6.

The rotating tool 5 can have its orientation and position freely changed, and can machine the workpiece 3 in the changed orientation and position. Therefore, it is not necessary to remove the universal head 4 from the head support 10 and replace the attachment 7 with another dedicated attachment for a particular machining process.

As a result, the universal head 4 requires no process of removing itself from the head support 10 and installing itself on the head support 10, and hence requires no process of replacing the attachment 7 with another dedicated attachment, which has heretofore been necessary. The burden on the operator for handling the universal head 4 is thus reduced, and the time which has been consumed to perform the setup process is not needed.

According to the present invention, a wide variety of dedicated attachments which have heretofore been need to be kept in inventory for various different machining types, and an attachment changer for changing those dedicated attachments are no longer required. As a result, the universal head 4 may remain mounted on the head support 10.

As no dedicated attachments are in use, the head support 10 does not need to have a drive source for actuating the rotating tools of such dedicated attachments.

The head support 10 thus does not require a main spindle, a drive motor for rotating the main spindle, and a clamp mechanism for clamping dedicated attachments. As the head support 10 does not have a function as a spindle head, the head support 10 is of a relatively simple structure.

The attachment 7 according to the present invention is smaller and lighter than dedicated attachments of the related art. Accordingly, the attachment 7 can easily be mounted on and detached from the universal head body 6.

As the universal head 4 has the attachment 7, the rotating tool 5 mounted on the attachment 7 can have its orientation and position freely changed under control of the three mutually transverse axes directions, C-axis control, and B-axis control for machining the workpiece 3 in various machining types as desired. For example, the universal head 4 may be operated under C-axis control and B-axis control to move the rotating tool 5 along a curved trajectory for machining an arbitrary curved surface on the workpiece 3.

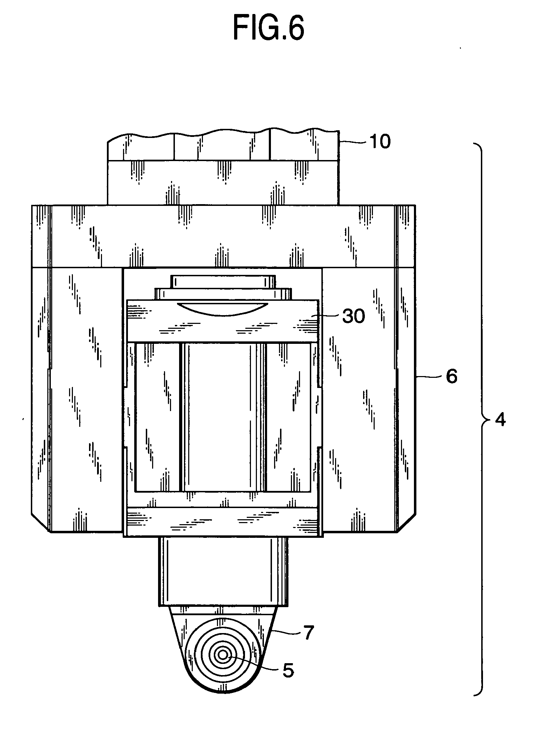

The swinging unit 30 supported in the universal head body 6 is swingable about the horizontal central swing axis CL2 thereof under B-axis control by the B-axis actuator, not shown. It is preferable to have two B-axis actuators, e.g., B-axis drive motors, disposed on respective both sides of the swinging unit 30, e.g., on the left and right sides of the swinging unit 30 as shown in Fig. 6, and housed in the universal head body 6. Since the swinging unit 30 is actuated by the B-axis drive motors on both sides thereof, the swinging unit 30 is smoothly swingable about the horizontal central swing axis CL2 thereof under B-axis control.

A single B-axis drive motor may be disposed on one side of the swinging unit 30, e.g., on the left or right side of the swinging unit 30 as shown in Fig. 6, for swinging the swinging unit 30.

The swinging unit 30 should preferably have its swing shaft directly coupled to the two B-axis drive motors or the single B-axis drive motor in order to eliminate any power loss at the time the drive forces of the B-axis drive motors or motor are transmitted to the swinging unit 30. The swing shaft is directed horizontally in alignment with the horizontal central swing axis CL2. Alternatively, the B-axis drive motors or motor may not be directly coupled to the swing shaft of the swinging unit 30, but may be coupled thereto by a power transmitting mechanism including gears. The swing shaft of the swinging unit 30 has its opposite ends rotatably supported by the universal head body 6. However, the swing shaft of the swinging unit 30 may be supported in a cantilevered fashion by the universal head body 6.

If the MC 1 needs to machine the workpiece 3 with higher rigidity, then the head support may incorporate therein a drive source such as a rotational drive motor, a main spindle rotatable by the drive source, and a clamp mechanism, and the universal head 4 may be detachably mounted on the head support.

When the universal head 4 is not in use, a tool such a rotating tool is directly mounted on the main spindle of the head support (spindle head) and clamped thereto by the clamp mechanism. Since the head support has the main spindle and other components, it performs the function of a spindle head.

The universal head according to the present invention may be incorporated in a horizontal machining center, a multi-axis turning center, a turning center, or a grinding machine, rather than a vertical machining center such as a double column machining center.

Although a certain preferred embodiment of the present invention has been shown and described in detail, it should be understood that various changes and modifications may be made therein without departing from the scope of the appended claims.

## Claims

1. A universal head (4) for use in a machine tool (1) for changing the orientation of a tool (5, 31) freely and machining a workpiece (3) with the tool (5, 31) in the changed orientation, said universal head (4) comprising:
a universal head body (6) including a swingable swinging unit (30) and adapted to be mounted for swiveling movement on a universal head support (10) of said machine tool (1), said swinging unit (30) including an attachment drive motor (32); and
an attachment (7) detachably mounted on said swinging unit (30) with the rotating tool (5) removably mounted on the attachment (7),
wherein the rotating tool (5) is rotatable about its own axis by said attachment drive motor (32) of said swinging unit (30).

2. A universal head (4) according to claim 1,
wherein said universal head body (6) is angularly movable in a horizontal plane to cause said universal head (4) to swivel about a vertical central axis (CL1) of said universal head support (10) under C-axis control to swivel said tool (5, 31) in the horizontal plane,
said swinging unit (30) supported by said universal head body (6) is swingable about a horizontal central swing axis (CL2) under B-axis control to swing said tool (5, 31) in a vertical plane,
said universal head (4) is operable under C-axis control and B-axis control to cause said tool (5, 31) to be oriented horizontally, downwardly perpendicularly to a floor, or obliquely in an arbitrary direction,
said rotating tool (5) has its orientation and position changeable under control of the three mutually transverse axes directions, C-axis control, and B-axis control, and machines said workpiece (3) in the changed orientation and position,
said universal head (4) is operable under C-axis control and B-axis control to cause said rotating tool (5) to move along a curved trajectory to machine an arbitrary curved surface on said workpiece (3), and
said universal head (4) remains supported on said universal head support (10) so that a process of installing said universal head (4) on said universal head support (10) and removing said universal head (4) is dispensed.

3. A universal head (4) according to claim 1, wherein said attachment (7) includes an attachment shaft (34) for rotating said rotating tool (5) through a power transmitting mechanism (33), said attachment shaft (34) having a second central axis (CL4), and said swinging unit (30) with the attachment (7) mounted thereon has a first central axis (CL3) extending perpendicularly to said second central axis (CL4) of said attachment shaft (34).

4. A universal head (4) according to claim 3, wherein said universal head body (6) has a third central axis (CL5), said first central axis (CL3) of said swinging unit (30) extends perpendicularly to said third central axis (CL5), and said rotating tool (5) mounted on said attachment (7) has a fourth central axis (CL6) extends parallel to and is spaced from said third central axis (CL5).

5. A universal head (4) according to claim 4,
wherein said machine tool comprises a double column machining center (1), and
while said swinging unit (30) is directed horizontally, said rotating tool (5) mounted on said attachment (7) is oriented downwardly and spaced from said third central axis (CL5) which extends vertically.

6. A universal head (4) according to claim 1, wherein said attachment (7) is mounted on said universal head body (6) so as to be oriented selectively in at least two directions which are angularly spaced by at least 90 degrees from each other.

7. A machine tool including a universal head (4) according to claim 1.

8. A machine tool including a universal head (4) according to claim 2.

9. A machine tool according to claim 8, wherein said machine tool comprises a double column machining center (1).
